# EUROPÄISCHE PATENTANMELDUNG

(11) **EP 2 889 981 A2**
(43) Veröffentlichungstag der Anmeldung: **01.07.2015**
(21) Anmeldenummer: 14199315.4
(22) Anmeldetag: 19.12.2014
(51) Int. Cl.: H02J 3/38

(54) **Verfahren zur Steuerung einer Energieverteilung**

(30) Priorität: 27.12.2013 EP 13191344
(71) Anmelder: Kiwigrid GmbH, 01129 Dresden (DE)
(72) Erfinder: Bether, Carsten, 02979 Elsterheide (DE)
(74) Vertreter: Lippert, Stachow & Partner

(57) **Zusammenfassung**

Der Erfindung, welche ein Verfahren zur Steuerung einer Energieverteilung betrifft, liegt die Aufgabe zugrunde, ein Verfahren zur Steuerung einer Energieverteilung zu schaffen, womit eine bessere Energieverteilung in einem aus Energiezellen bestehenden Energienetz erreicht und der Aufwand zur Steuerung der Energiequellen und Energiesenken minimiert wird. Diese Aufgabe wird dadurch gelöst, dass dem lokalen Energienetz eine Steuerung hinzugefügt wird, die in einem senkenbasierten Modus die Energiequelle nach dem Energiebedarf der Energiesenke steuert und die in einem quellenbasierten Modus die Energiesenke nach dem Energieaufkommen der Energiequelle steuert, und dass die Zugriffe auf einen dem lokalen Energienetz gehörenden Anschluss zu einem übergeordneten Energienetz hinsichtlich Zugriffshäufigkeit und/oder Energiemenge durch Steuerung von Energiequelle und Energiesenke minimiert werden.

## Beschreibung

Die Erfindung betrifft ein Verfahren zur Steuerung einer Energieverteilung, wobei ein lokales Energienetz durch eine Energiezelle, bestehend aus Zellteilnehmern, wie zumindest einer Energiequelle und zumindest einer Energiesenke, die zu ein und derselben kleinsten energetischen Abrechnungseinheit gehören, gebildet wird.

Die Erzeugung elektrischer Energie erfolgt immer mehr in sogenannten dezentralen Energieerzeugungseinheiten oder Energiequellen. Derartige Einheiten können beispielsweise Photovoltaik-Anlagen, Windkrafträder oder auch Blockheizkraftwerke sein, welche meist einem Objekt wie einem Haus und dessen internen Energieverteilungsnetz zugeordnet sind.

Derart besteht die Möglichkeit mittels einer Photovoltaik-Anlage bei entsprechender Sonneneinstrahlung oder mittels eines Windkraftrades bei entsprechender Windstärke elektrische Energie für den eigenen Bedarf oder zum Einspeisen in ein übergeordnetes Energieverteilungsnetz zu erzeugen.

In einem Beispiel wird die mittels einer Photovoltaik-Anlage, installiert auf dem Dach eines Wohnhauses, den im elektrischen Netz dieses Hauses angeschlossenen Verbrauchern bereitgestellt. Wird mehr Energie durch die Photovoltaik-Anlage erzeugt als von den eingeschalteten Verbrauchern im Haus verbraucht wird, kann diese Mehrenergie in das übergeordnete Energieverteilungsnetz eingespeist werden.

Erzeugt die Photovoltaik-Anlage weniger Energie als von den eingeschalteten Verbrauchern benötigt wird, muss Energie aus dem übergeordneten Energieverteilungsnetz eingespeist werden.

Nachteilig an diesem Stand der Technik ist, dass derart starke Bedarfsschwankungen im übergeordneten Energieverteilungsnetz entstehen, welche nicht oder sehr schwer voraussagbar sind und durch Maßnahmen des Netzbetreibers ausgeregelt werden müssen.

Ein weiterer Nachteil besteht darin, dass im internen Energienetz eines Hauses Energie zu einem Zeitpunkt erzeugt zu welchem sie von Verbrauchern im Haus nicht genutzt wird. Die kann dazu führen, dass zu einem Späteren Zeitpunkt wenn eine Verbraucher im Haus wie eine Wärmepumpe zugeschaltet wird keine Eigenenergieerzeugung mehr möglich ist und Energie eingekauft werden muss.

Eine Koordination von Erzeugung und Verbrauch findet nicht statt.

Der Erfindung liegt somit die Aufgabe zugrunde, ein Verfahren zur Steuerung einer Energieverteilung zu schaffen, womit eine bessere Energieverteilung in einem aus Energiezellen bestehenden Energienetz erreicht und der Aufwand zur Steuerung der Energiequellen und Energiesenken minimiert wird.

Gemäß der Erfindung wird die Aufgabe bei einem Verfahren zur Steuerung einer Energieverteilung der eingangs genannten Art dadurch gelöst, dass dem lokalen Energienetz eine Steuerung hinzugefügt wird, die in einem senkenbasierten Modus die Energiequelle nach dem Energiebedarf der Energiesenke steuert und die in einem quellenbasierten Modus die Energiesenke nach dem Energieaufkommen der Energiequelle steuert, und dass die Zugriffe auf einen dem lokalen Energienetz zugehörigen Anschluss zu einem übergeordneten Energienetz hinsichtlich Zugriffshäufigkeit und/oder Energiemenge durch Steuerung von Energiequelle und Energiesenke minimiert werden.

Das Verfahren sieht vor die Energieerzeugung und den Energieverbrauch innerhalb einer Energiezelle derart zu steuern, dass die Summe aus erzeugter Energie und verbrauchter Energie in dieser Zelle gleich Null ist. Somit ist kein Zuführen von elektrischer Energie in die Zelle notwendig. Andererseits muss auch keine elektrische Energie aus der betrachteten Energiezelle abgegeben werden.

Durch die erfindungsgemäße Steuerung von Erzeugung und Verbrauch wird die Anzahl der Zugriffe auf ein übergeordnetes oder nebengeordnetes Energienetz minimiert. Gleiches gilt auch für die Energiemenge, welche aus einem übergeordneten oder nebengeordneten Energienetz bezogen wird oder welche in dieses, bei einem Überschuss der in der Energiezelle selbst erzeugten Energie, transferiert wird.

Eine verfahrensgemäß gesteuerte Energiezelle umfasst mindestens eine Energiequelle (Erzeuger), eine Energiesenke (Verbraucher) sowie einen Anschluss, über welchen Zugriffe auf eine neben oder übergeordnetes Energiezelle erfolgen können. Über diesen Anschluss kann im Fall einer Überdeckung, also wenn mehr Energie erzeugt als verbraucht wird, Energie aus der Zelle abgegeben. Im Fall einer Unterdeckung, wenn mehr Energie verbraucht als erzeugt wird, kann über diesen Anschluss Energie in die Zelle aufgenommen. Das Ziel des Verfahrens besteht in der Minimierung der Zugriffe über diesen Anschluss, sowohl mengen- als auch leistungsmäßig.

Dieses Ziel wird dadurch erreicht, dass innerhalb der Zelle bei einer Überdeckung mindestens eine Energiesenke zugeschaltet oder mindestens eine Energiequelle abgeschaltet wird, um das benötigte Gleichgewicht zwischen Erzeugung und Verbrauch von Energie innerhalb der Zelle herzustellen.

Zur Realisierung dieser Steuervorgänge ist in jeder Energiezelle eine Steuerung vorgesehen, in welcher das erfindungsgemäße Verfahren abläuft und welche über Mittel zur Steuerung anderer Einheiten sowie zum Empfang von Daten anderer Einheiten verfügt.

Im Fall einer Unterdeckung wird mindestens eine weitere Energiequelle zugeschaltet oder eine oder mehrere Energiesenken abgeschaltet.

In beiden Fällen können auch Energiespeicher in den Steuerablauf mit einbezogen werden, so dass im Fall einer Überdeckung ein Teil der Energie einem Speicher zur Speicherung der Energie zugeführt wird. Alternativ wird im Fall einer Unterdeckung dem Speicher gespeicherte Energie entnommen.

Nur für den Fall, dass das Gleichgewicht zwischen Energieerzeugung und -verbrauch innerhalb einer Energiezelle durch die verfahrensgemäße Steuerung nicht erfolgen kann, wird ein Zugriff auf eine außerhalb der Energiezelle befindliches Netz oder eine weitere Energiezelle über den Anschluss zugelassen.

In einer Ausgestaltung der Erfindung ist vorgesehen, dass der Energiezelle weitere Energiequellen oder Energiesenken zugeordnet werden.

Das Verfahren ist nicht auf eine Energiequelle und eine Energiesenke innerhalb einer Energiezelle beschränkt. Es ist möglich, beliebig viele Energiequellen, Energiesenken und auch Energiespeicher in die Steuerung der Energieverteilung mit einzubeziehen. Hierbei können die Einheiten Energiequelle, Energiesenken und oder Energiespeicher sowohl fest in der Energiezelle installiert als auch mobiler Art sein. So könnte beispielsweise eine Stromgenerator oder ein Speicher nur zeitweise in einer ersten Energiezelle betrieben werden. Nach einem Umschalten oder einem Ortswechsel in eine zweite Energiezelle sind diese Elemente dann der zweiten Energiezelle zugeordnet.

In einer weiteren Ausgestaltung der Erfindung ist vorgesehen, dass die Steuerung derart ausgestaltet ist, dass die Zugriffe über den Anschluss zu dem übergeordneten Energienetz durch Hinzuschalten einer der Energiequellen oder einer der Energiesenken minimiert werden.

Durch das Verfahren werden im Fall einer Unterdeckung weitere Energiequellen zugeschaltet oder Energiesenken abgeschaltet, um das Gleichgewicht zwischen Erzeugung und Verbrauch von Energie zu gewährleisten.

In einer besonderen Ausführung der Erfindung ist vorgesehen, dass die Steuerung derart ausgestaltet ist, dass die Zugriffe über den Anschluss zu dem übergeordneten Energienetz durch Abschalten einer der Energiequellen oder einer der Energiesenken minimiert werden.

Alternativ wird gesteuert durch das Verfahren im Fall einer Überdeckung in der Zelle mindestens eine Energiequelle abgeschaltet oder mindestens eine Energiesenke zugeschaltet.

In einer Ausgestaltungsform der Erfindung ist vorgesehen, dass dem lokalen Energienetz ein lokaler Energiespeicher hinzugefügt wird und die Steuerung derart ausgestaltet ist, dass die Zugriffe auf den lokalen Energiespeicher hinsichtlich Zugriffshäufigkeit und/oder Energiemenge durch Steuerung von Energiequelle und Energiesenke minimiert werden.

Neben der Möglichkeit der Steuerung der Energieverteilung zur Minimierung der Zugriffe auf bzw. über einen Anschluss einer Energiezelle ist auch eine verfahrensgemäße Steuerung zur Minimierung von Zugriffen auf einen der Energiezelle zugeordneten lokalen Energiespeicher möglich.

In einer Ausführung der Erfindung ist vorgesehen, dass die Steuerung derart ausgestaltet ist, dass die Zugriffe auf den lokalen Energiespeicher durch Hinzuschalten einer Energiequelle oder einer Energiesenke minimiert werden.

In einer Ausführungsform der Erfindung ist vorgesehen, dass die Steuerung derart ausgestaltet ist, dass die Zugriffe auf den lokalen Energiespeicher durch Abschalten einer Energiequelle oder einer Energiesenke minimiert werden.

Zur Reduzierung der Zugriffe auf den lokalen Energiespeicher wird, wie bereits weiter oben beschrieben, in die Fälle einer Überdeckung sowie einer Unterdeckung in der betreffenden Energiezelle unterschieden. Gesteuert durch eine in der jeweiligen Energiezelle angeordnete Steuerung, in welcher das steuernde Verfahren abläuft, wird ein Zu- oder Abschalten der entsprechenden Einheiten realisiert, um die Erzeugung und den Verbrauch von Energie im Gleichgewicht zu halten.

In einer besonderen Ausführungsform der Erfindung ist vorgesehen, dass ein übergeordnetes Energienetz bestehend aus dem lokalen Energienetz und mindestens einem weiteren lokalen Energienetz und einer übergeordneten Steuerung gebildet wird, wobei jedes lokale Energienetz über den jeweiligen Anschluss mit einem übergeordneten Energienetz verbunden ist und wobei die übergeordnete Steuerung derart ausgestaltet ist, dass die Energiebilanz aller im übergeordneten Energienetz stattfindenden Zugriffe über die Anschlüsse zu dem übergeordneten Energienetz minimiert werden.

Das Verfahren sieht die Steuerung der Energieverteilung innerhalb einer jeden Energiezelle vor. Darüber hinaus ist vorgesehen die Steuerung der Energieverteilung auch zwischen zwei oder mehr Energiezellen zu gewährleisten. Zu diesem Zweck können die Steuerungen zweier Energiezellen durch geeignete Mittel miteinander oder jeweils mit einer übergeordneten Steuerung verbunden werden. Mit dieser Art der Steuerung wird für den Fall, dass Energieaufkommen und Energieverbrauch innerhalb einer Zelle nicht gleich sind versucht, die Übertragungswege und -leistung im Gesamtnetz zu minimieren. Somit wird eine möglichst lokalen Energieerzeugung und Energienutzung unterstützt.

Die Steuerung des Gleichgewichts von Energieerzeugung und Verbrauch ausgeweitet auf zwei Energiezellen erfolgt derart, dass das Verfahren die Informationen über die aktuelle Energieerzeugung sowie die Energieverbräuche in beiden Zellen überwacht und ausgleicht.

Liegt in der ersten Energiezelle der Fall einer Unterdeckung vor, wird verfahrensgemäß versucht, durch ein Zuschalten einer Energiequelle oder eines Energiespeichers in der zweiten Energiezelle das Gleichgewicht wieder herzustellen. Hierzu werden durch das Verfahren die Steuerungen in den beteiligten Zellen genutzt.

Im Fall einer Überdeckung in der ersten Energiezelle wird gesteuert durch das Verfahren und die Steuerung in der zweiten Energiezelle das Gleichgewicht durch Zuschalten eines Verbrauchers oder Energiespeichers in der zweiten Energiezelle hergestellt.

In einer anderen Ausführung der Erfindung ist vorgesehen, dass die Steuerung der Energiequellen und Energiesenken drahtlos erfolgt.

Es ist vorgesehen, die Energiequellen und/oder Energiesenken mittels einer Steuerung zu schalten. Zu diesem Zweck wird die Steuerung mit den zu steuernden Einheiten zur Übertragung von Steuerbefehlen drahtlos oder drahtgebunden verbunden.

In einer weiteren Ausführungsform der Erfindung ist vorgesehen, dass Steueralgorithmen für die Steuerung von einem zentralen Server herunterladbar sind.

Die dem Verfahren zugrundeliegenden Steueralgorithmen können zentral abgespeichert werden, beispielsweise auf einem Server eines Nutzers, welcher innerhalb seines Hauses eine oder mehrere Energiezellen betreibt oder eines Energienetzbetreibers. Derart kann bei einer Inbetriebnahme einer weiteren Energiezelle der Steueralgorithmus für die Steuerung dieser Zelle von dem Server heruntergeladen werden. Ein weiterer Vorteil besteht darin, dass Aktualisierungen der Software des Steueralgorithmus nur auf dem Server durchgeführt werden müssen. Derartige Aktualisierungen werden nachfolgend von den Steuerungen in den Energiezellen heruntergeladen und umgesetzt.

Die Erfindung soll nachfolgend anhand mehrerer Ausführungsbeispiele näher erläutert werden. In den zugehörigen Zeichnungen zeigt
- Fig. 1: eine Prinzipdarstellung einer, ein lokales Energienetz bildenden, Energiezelle mit einer Energiequelle und einer Energiesenke sowie mit einem zugehörigen Anschluss zu einem übergeordneten Energienetz,
- Fig. 2: eine Prinzipdarstellung einer weiteren Energiezelle mit mehreren Energiequellen, Energiesenken und Energiespeichern,
- Fig. 3: eine Prinzipdarstellung einer komplexen Energiezelle mit mehreren Energiequellen, Energiesenken und Energiespeichern,
- Fig. 4: eine Energiezelle nach Fig. 1 mit einer Steuerung und entsprechenden Interface-Baugruppen,
- Fig. 5: eine beispielhafte komplexe Energiezelle nach Fig. 3 mit zugehörigen Steuerungen, einer übergeordneten Steuerung, angeordnet im übergeordneten Energienetzt und den jeweiligen Interface-Baugruppen,
- Fig. 6: eine Prinzipdarstellung einer Realisierung des Verfahrens in einem komplexen Energienetz mit mehreren Energiezellen.

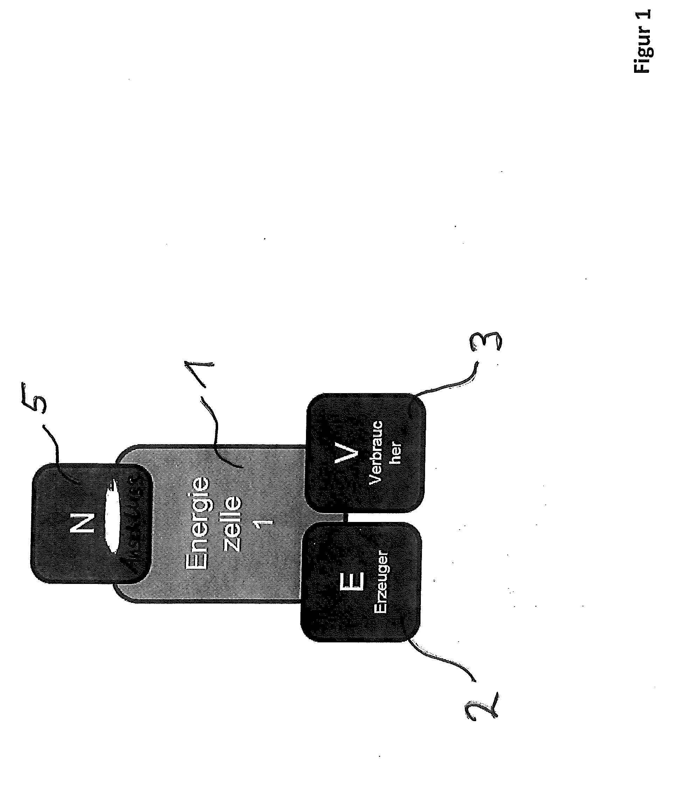

Die Fig. 1 zeigt eine Energiezelle 1, welche ein sogenanntes lokales Energienetz bildet und mindestens eine Energiequelle 2, mindestens eine Energiesenke 3 und einen Anschluss 5 aufweist. Derartige Energiequellen 2 können beispielsweise eine Windkraft- oder Solaranlage, ein Generator oder andere energieerzeugenden Einheiten sein.

Als Energiesenken werden beliebige Verbraucher wie Lampen, Heizungen, Radio- oder TV-Geräte, Computer, Kühlschränke, Waschmaschinen, Wärmepumpen, Klimaanlagen und viele mehr verstanden.

Die mittels des vorgeschlagenen Verfahrens steuerbare Energieverteilung bezieht sich in der Beschreibung hauptsächlich auf Elektroenergie. Eine Beschränkung auf diese Energieform liegt aber nicht vor, so kann das Verfahren gleichwohl auch auf eine Steuerung der Verteilung von Wärmeenergie angewandt werden.

In einer besonderen Ausgestaltung des Verfahrens ist vorgesehen elektrische Energie in thermische Energie zu wandeln und umgekehrt. Derart kann die Energie beispielsweise vorteilhaft zwischengespeichert werden.

Die Energiezelle 1 weist einen Anschluss 5 auf, über welchen diese mit einem übergeordneten Energienetzt oder direkt mit einer anderen Energiezellen 1 verbunden werden kann.

Eine derartige Energiezelle kann beispielsweise durch eine Photovoltaik-Anlage als Energiequelle 2 sowie eine Wärmepumpe als Energiesenke 3 gebildet werden. Ohne den Einsatz des erfindungsgemäßen Verfahrens würde im Fall einer Unterdeckung, also wenn weniger Energie in der Energiezelle erzeugt als verbraucht wird, der Betreiber dieser Energiezelle elektrische Energie aus einem externen Netz beziehen müssen. Im Fall einer Überdeckung, wenn mehr Energie erzeugt als verbraucht wird, muss Energie in das externe Netz abgegeben werden. Das Verfahren steuert die Energieverteilung derart, dass die Zugriffe auf das externe Netz, welches eine nebengeordnete Energiezelle oder ein übergeordnetes Energienetz sein kann, minimiert werden.

Dies erfolgt dadurch, dass eine Steuerung in der Energiezelle vorgesehen wird, welche die Wärmepumpe nur im Fall der ausreichenden Energieerzeugung durch die Photovoltaik-Anlage zuschaltet. Alternativ wird die Photovoltaik-Anlage nur dann in das interne Energienetz zugeschaltet, wenn die Wärmepumpe, beispielsweise in Abhängigkeit ihres Betriebsparameters Pufferspeicherinhalt, betrieben werden kann. Derart werden Zugriffe auf ein externes Energienetz vermieden.

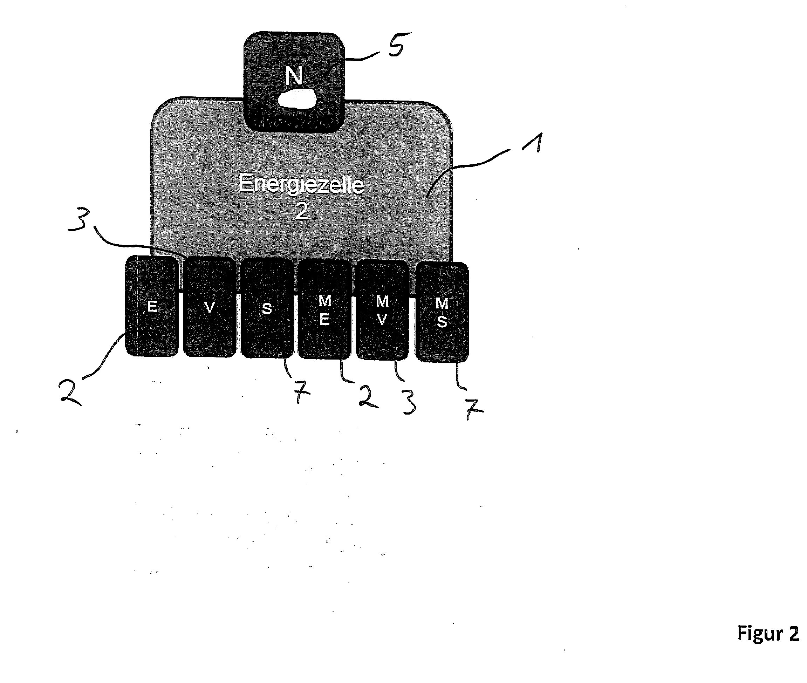

In der Fig. 2 ist eine weitere eine Energiezelle 1 dargestellt. Diese weist mehrere Energiequellen 2 (E, ME), mehrere Energiesenken 3 (V, MV) sowie Speicher 7 (S, MS), beispielsweise zur Speicherung von elektrischer Energie auf. Alternativ kann elektrische Energie auch in thermische Energie gewandelt und diese dann im Speicher 7 gespeichert werden. In der Fig. 2 sind der Erzeuger E 2, der Verbraucher V 3 und der Speicher S 7 fest installierte Einheiten in der Energiezelle 1. Der Erzeuger ME 2, der Verbraucher MV 3 und der Speicher MS 7 sind mobile Einheiten, welche aus der Energiezelle 1 entfernt oder in diese eingefügt werden können.

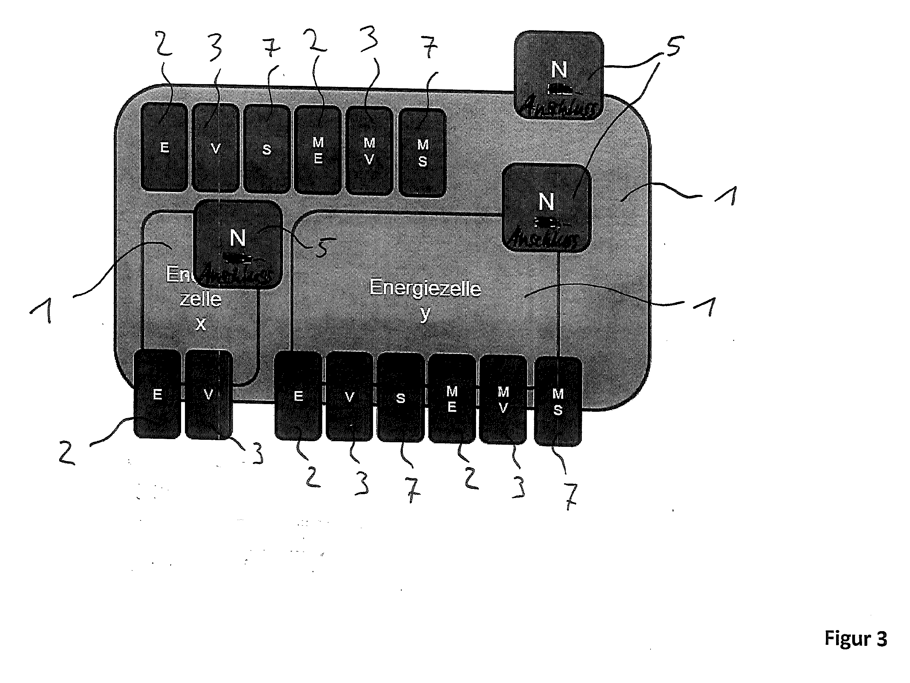

Die Fig. 3 zeigt mehrere Energiezellen 1, welche nebeneinander und ineinander verschachtelt als eine sogenannte komplexe Energiezelle 1 ausgeführt sind.

Alle Energiezellen 1 weisen einen zugehörigen Anschluss 5 auf, über welchen diese miteinander und optional mit einem übergeordneten Energienetzt 6 verbunden werden können. In der Fig. 3, welch nur eine beispielhafte Darstellung ist, sind nur die Anschlüsse 5 nicht aber deren Verbindungen untereinander oder mit einem Übergeordneten Energienetz 6 dargestellt.

Auch in dieser Darstellung sind sowohl fest installierte sowie ortsveränderliche Einheiten, gekennzeichnet durch ein vorangestelltes M, Bestandteile der komplexen Energiezelle.

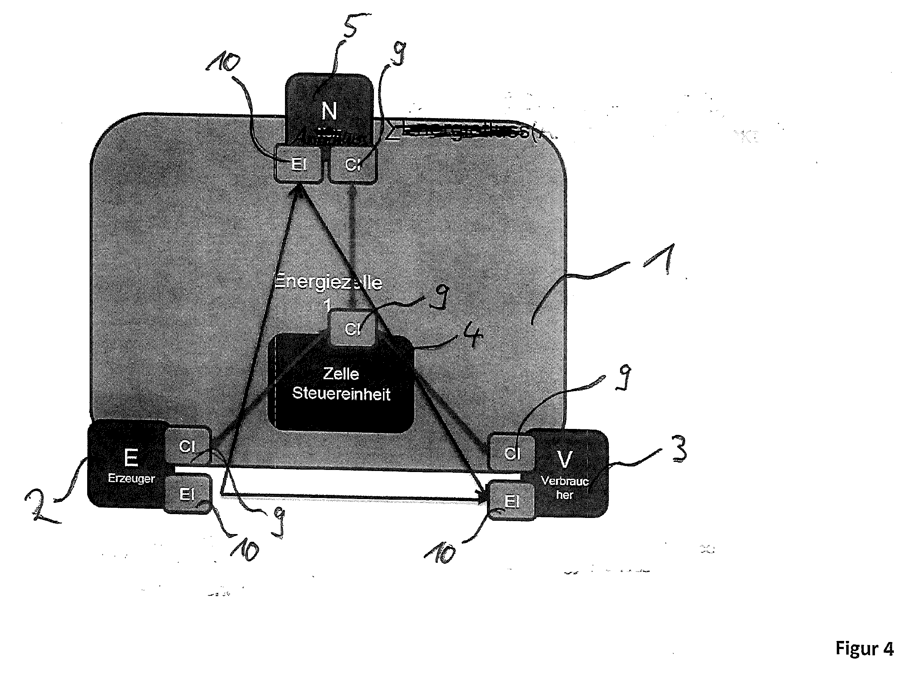

Die Fig. 4 zeigt eine bereits aus der Fig. 1 bekannte Energiezelle 1. Zusätzlich dargestellt ist eine in der Energiezelle 1 angeordnete Steuerung 4, welche das erfindungsgemäße Verfahren umsetzt. Die Steuerung 4 weist eine Kommunikations-Schnittstelle 9 auf, über welches sie mit den angeschlossenen Einheiten 2, 3 und 5 kommunizieren kann. Derart können beispielsweise Steuerbefehle an die angeschlossenen Einheiten 2, 3 und 5 übermittelt werde, beispielsweise zu Ein- oder Ausschalten einer Einheit. Außerdem besteht die Möglichkeit Zustandsinformationen von den angeschlossenen Einheiten 2, 3 und 5 an die Steuerung 4 zu übertragen, wie beispielsweise "Eingeschaltet", "Ausgeschaltet" oder aktuelle Spannungs-, Strom-, Leistungs- oder Verbrauchswerte der Einheiten.

Die Einheiten Energiequelle 2, Energiesenke 3 und der Anschluss 5 sind außerdem mit zugeordneten Energie-Schnittstellen 10 dargestellt, über welch beispielsweise elektrische Energie ausgetauscht wird.

Das erfindungsgemäße Verfahren sieht vor, dass die Steuerung 4 der Energiezelle 1 in zwei verschiedenen Betriebsarten betrieben werden kann, wobei in jeder Betriebsart das Ziel darin besteht, die Erzeugung und den Verbrauch von Elektroenergie innerhalb einer Energiezelle 1 derart zu regeln, dass keine Elektroenergie über den Anschluss 5 zusätzlich bezogen werden muss oder über den Anschluss 5 abgegeben werden muss.

In einer ersten Betriebsart, dem sogenannten senkenbasierten Modus erfolgt eine Steuerung der Energiequelle 2 in Abhängigkeit des Bedarfs der Energiesenke 3. So wird beispielsweise für den Fall das eine Energiesenke 3 eingeschaltet werden soll, durch einen Steuerbefehl der Steuerung 4 zuvor eine Energiequelle 2 eingeschaltet. Für den Fall, dass sich die Energiequelle 2 in ihrer Leistungsbereitstellung steuern lässt, wird dieser durch die Steuerung 4 auch eine Information über den benötigten Leistungsbedarf übertragen, welcher dann von der Energiequelle 2 bereitgestellt wird.

In der zweiten Betriebsart, dem sogenannten quellenbasierten Modus erfolgt eine Steuerung der Energiesenke 3 in Abhängigkeit des Energieaufkommens der Energiequelle 2. In diesem Fall wird die Erzeugung der Elektroenergie durch die Energiequelle 2 von der Steuerung 4 überwacht. Sind beispielsweise Energiesenken 3 zu betreiben, bei denen es nicht auf einen genauen Einschaltmoment zu einer vorgegebenen Zeit ankommt, wie eine Waschmaschine oder eine elektrische Speicherheizung, so werden die Anforderungen zum Einschalten dieser Energiesenken 3 an die Steuerung 4 übertragen und dort abgespeichert.

Eine als Energiequelle 2 arbeitende Solaranlage beginnt nach Sonnenaufgang Energie zu erzeugen, was durch die Steuerung 4 überwacht wird. Entspricht die von der Solaranlage 2 erzeugte Energie dem Bedarf der einzuschaltenden Waschmaschine 3 wird diese durch einen Steuerbefehl der Steuerung 4 zugeschaltet. Erhöht sich die durch Solaranlage erzeugte Energie weiter bis auf einen Wert, bei welchem neben der Waschmaschine auch noch eine zweite Energiesenke 3 wie eine Speicherheizung betrieben werden kann, so schaltet die Steuerung 4 auch diese Energiesenke 3 ein. Derart können die Energiesenken 3 nur durch die zur Energiezelle 1 zugehörige Energiequelle 2 betrieben werden. Eine Einspeisung von Elektroenergie aus einem übergeordneten (externen) Stromversorgungsnetz über den Anschluss 5 ist nicht erforderlich.

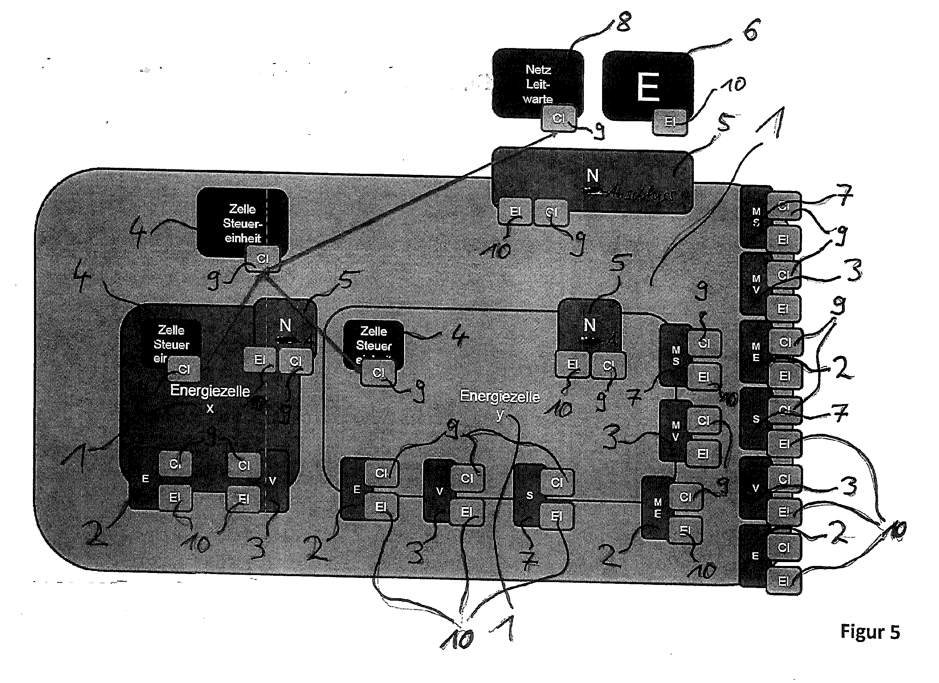

In der Fig. 5 sind beispielhaft mehrere Energiezellen 1 dargestellt. Neben einer ersten Energiezelle x 1 ist eine zweite Energiezelle y 1 jeweils mit mindestens einer Energiequelle 2 sowie mindestens einer Energiesenke 3 abgebildet. Die erste und die zweite Energiezelle 1 sind in eine dritte Energiezelle 1 integriert, welche auch mehrere Energiequellen 2 und mehrere Energiesenken 3 aufweist. Eine derartige Anordnung der Energiezellen 1 wird als eine sogenannte komplexe Energiezelle bezeichnet.

Die erste und die zweite Energiezelle 1 weisen je einen Anschluss 5 auf über welchen diese mit einem übergeordneten Energienetz verbindbar sind. In der Darstellung der Fig. 5 kann der Anschluss 5 dieser beiden Energiezellen (x, y) mit dem internen Energienetz der dritten Energiezelle 1 als eine Variante eines beiden Zellen 1 übergeordneten Energienetzes 5 verbunden werden. Alternativ könne die Anschlüsse 5 der Energiezellen (x, y) 1 auch miteinander oder mit einem der dritten Energiezelle 1 übergeordneten Energienetz 5 verbunden werden. In der Fig. 5 ist nur das zuletzt beschriebene übergeordnete Energienetz 5 dargestellt.

Jede der Energiezellen weist eine Steuerung 4 auf, welche über eine zugehörige Kommunikations-Schnittstelle 9 zu einem Kommunikations-Netzwerk zusammengeschaltet sind. Somit können sowohl benachbarte Energiezellen 1 als auch ineinander verschachtelt angeordnete Energiezellen miteinander kommunizieren. Zusätzlich besteht die Möglichkeit einer Kommunikation der Steuerungen 4 mit einer übergeordneten Steuerung 8, beispielsweise einer Netzleitwarte eines Energienetzbetreibers.

Derart ist es möglich, das Verfahren sowohl in jeder einzelnen Energiezelle 1 als auch zellübergreifend zwischen zwei oder mehr Energiezelle 1 anzuwenden.

Für den Fall, dass die in der Energiezelle x 1 erzeugte elektrische Energie der Energiequelle E 2 nicht ausreicht um einen oder mehrere Energiesenken 3 innerhalb der Energiezelle 1 zu versorgen, wird über die Steuerung 4 der Energiezelle x 1 bei der Steuerung 4 der Energiezelle y 1 angefragt, ob mittels dieser Zelle die noch benötigte elektrische Energie zur Verfügung gestellt werden kann. Besteht diese Möglichkeit, so kann die Energie aus der Energiezelle y 1 über deren Anschluss 5, eine entsprechende Stromnetzverbindung zum Anschluss 5 der der Energiezelle x 1 übertragen und den Energiesenken 3 innerhalb der Energiezelle x 1 zur Verfügung gestellt werden.

Umgekehrt kann auch bei einem Überschuss an erzeugter Energie in einer ersten Energiezelle 1 bei einer zweiten oder mehreren anderen Energiezellen 1 angefragt werden, ob es in diesen Zellen 1 einen Bedarf für die überschüssige Energie gibt. Im Fall eines entsprechenden Bedarfs in einer anderen Energiezelle 1 wird dieser die Energie sodann zur Verfügung gestellt.

Das erfindungsgemäße Verfahren ist sowohl zur Steuerung innerhalb einer einzelnen Energiezelle 1 als auch zur Steuerung benachbarter oder ineinander verschachtelter Energiezellen 1 vorgesehen.

Für den Fall, dass das Verfahren mehrere Energiezellen 1 steuert ist vorgesehen eine bestimmte Reihenfolge bei der Regelung zu hinterlegen. So wird in einem ersten Schritt eine Regelung innerhalb einer Energiezelle 1 selbst erfolgen. Beispielsweise innerhalb eines Objektes wie einem Gebäude in einem sogenannten Niederspannungsbereich (Inner Cell Optimization).

Nachfolgend werden benachbarte Energiezellen 1 mit einbezogen. Diese zellübergreifende Regelung schließt beispielsweise Trafostationen und andere versorgte Objekte (Gebäude) oder auch Stadtteilemit ein. Dieses Szenario kann in einem Niederspannungsbereich (Across Cell Optimization) realisiert werden.

In einer nachfolgenden Stufe wird das Verfahren auf ein übergeordnetes Netz 6, beispielsweise ein Spannungsverteilungsnetz im Niederspannungsbereich oder ein Nahwärmenetz ausgeweitet (Distribution Network Optimization).

In einer letzten Stufe erfolgt eine Anwendung des Verfahrens auf ein ganzes Übertragungsnetz, wie einem Mittel- und/oder Hochspannungsnetz (Transmission Network Optimization).

Das Verfahren optimiert Energieerzeugung und Energieverbrauch ausgehend von dezentralen Erzeugern innerhalb einer Energiezelle 1 sozusagen nach außen, sodass nach der Regelung innerhalb der Energiezelle 1 (Inner-Cell) eine Regelung zellübergreifend (Across-Cell) erfolgt. Sind weitere Stufen der Steuerung einer Energieverteilung notwendig wird das Verfahren auf ein Verteilernetz (Distribution-Network) und erst dann auf ein Übertragungsnetz (Transmission-Network) ausgeweitet.

Üblicherweise hält ein derartiges Übertragungsnetz eine Menge von Primärenergie und Regelenergie vor, um Schwankungen auszugleichen. Auch diese Eigenschaft kann durch das Verfahren zur Steuerung der Energieverteilung berücksichtigt und genutzt werden.

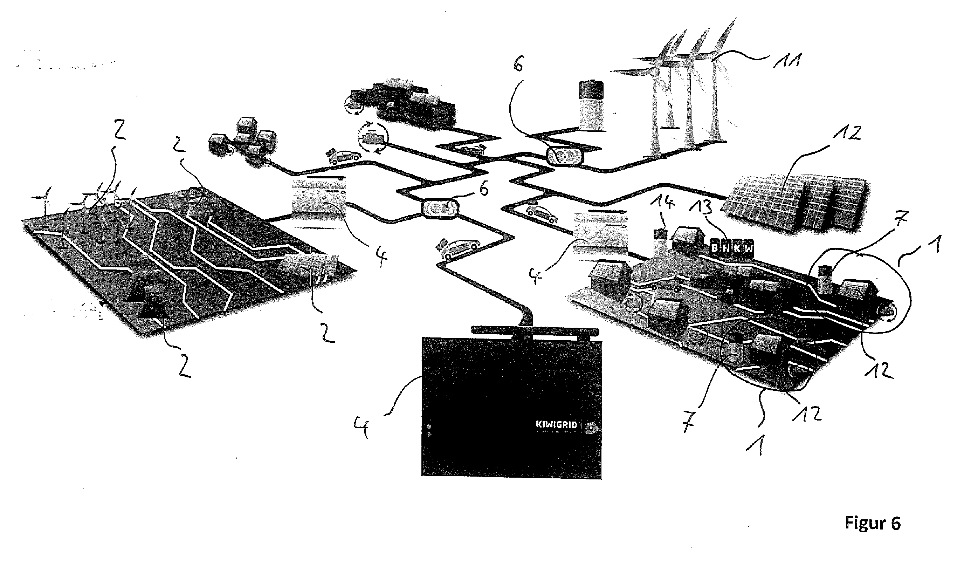

In der Fig. 6 ist ein Beispielszenario mit mehreren Energiequellen 2, Energiesenken 3, Energiespeichern 7 angeordnet in mehrerer benachbarten und/oder ineinander verschachtelten Energiezellen 1 dargestellt.

In diesem Beispiel sind mehrere Energiezellen 1 mit Windkraftgeneratoren 11 als Energieerzeuger 1 ausgestattet. Mehrere Einfamilienhäuser weisen Photovoltaik-Anlagen 12 und einige Blockheizkraftwerke 13 zur Erzeugung elektrischer Energie auf. In einigen Häusern sind Batteriespeicher 14 als lokale Energiespeicher 7 zur Speicherung der erzeugten Energie angeordnet.

Als Energiesenken 3 sind Klimaanlagen, Wärmepumpen, Elektroheizungen, Waschmaschinen und viele andere Elektrogeräte vorgesehen.

Auch in diesem Szenario wird vorrangig versucht einen Ausgleich zwischen erzeugter und verbrauchter Energie innerhalb jeder Energiezelle 1 zu gewährleisten.

Zu diesem Zweck werden in der Energiezelle 1 im Fall einer Überdeckung weitere Verbraucher 3 zugeschaltet oder mindestens eine Energiequelle 2 abgeschaltet. In einem zweiten Schritt werden wiederum eine oder mehrere benachbarte Energiezellen 1 in das Verfahren zur Steuerung der Energieverteilung mit einbezogen. So kann im Fall der Überdeckung in einer ersten Zelle 1 elektrische Energie für zuschaltbare Verbraucher 3 in einer zweiten Energiezelle 1 bereitgestellt und derart ein Ausgleich zwischen erzeugter und verbrauchter Energie in einer Betrachtung über beide Energiezellen 1 erreicht werden.

Das erfindungsgemäße Verfahren ermöglicht Energienetzbetreibern und/oder großen Energieerzeugern mittels derer übergeordneten Steuerung 6 auch Anfragen an die im Netzwerk befindlichen Energiezellen 1 zum dezentralen Einspeisen von elektrischer Energie im Bedarfsfall (Unterdeckung) in das übergeordnete Energienetz 6 zu generieren.

Alternativ könnte im Fall einer Überdeckung im übergeordneten Energienetz 6 die dezentrale Einspeisung von elektrischer Energie durch die Energiezellen 1 unterdrückt werden. Derart wird eine Verbesserung der Steuerbarkeit der großen Energieerzeugungsanlagen des Energienetzbetreibers erreicht.

### Bezugszeichenliste

- 1: Energiezelle
- 2: Energiequelle
- 3: Energiesenke
- 4: Steuerung
- 5: Anschluss zum übergeordneten Energienetz
- 6: übergeordnetes Energienetz
- 7: lokaler Energiespeicher
- 8: übergeordnete Steuerung
- 9: Kommunikations-Schnittstelle
- 10: Energie-Schnittstelle
- 11: Windkraftgenerator
- 12: Photovoltaik-Anlage
- 13: Blockheizkraftwerk
- 14: Batteriespeicher

## Patentansprüche

1. Verfahren zur Steuerung einer Energieverteilung, wobei ein lokales Energienetz durch eine Energiezelle (1), bestehend aus Zellteilnehmern, wie zumindest einer Energiequelle (2) und zumindest einer Energiesenke (3), die zu ein und derselben kleinsten energetischen Abrechnungseinheit gehören, gebildet wird, **dadurch gekennzeichnet, dass** dem lokalen Energienetz eine Steuerung (4) hinzugefügt wird, die in einem senkenbasierten Modus die Energiequelle (2) nach dem Energiebedarf der Energiesenke (3) steuert und die in einem quellenbasierten Modus die Energiesenke (3) nach dem Energieaufkommen der Energiequelle (2) steuert, und dass die Zugriffe auf einen dem lokalen Energienetz gehörenden Anschluss (5) zu einem übergeordneten Energienetz (6) hinsichtlich Zugriffshäufigkeit und/oder Energiemenge durch Steuerung von Energiequelle (2) und Energiesenke (3) minimiert werden.

2. Verfahren nach Anspruch 1, **dadurch gekennzeichnet, dass** der Energiezelle (1) weitere Energiequellen (2) oder Energiesenken (3) zugeordnet werden.

3. Verfahren nach Anspruch 1 oder 2, **dadurch gekennzeichnet, dass** die Steuerung (4) derart ausgestaltet ist, dass die Zugriffe über den Anschluss (5) zu dem übergeordneten Energienetz (6) durch Hinzuschalten einer der Energiequellen (2) oder einer der Energiesenken (3) minimiert werden.

4. Verfahren nach Anspruch 1 oder 2, **dadurch gekennzeichnet, dass** die Steuerung (4) derart ausgestaltet ist, dass die Zugriffe über den Anschluss (5) zu dem übergeordneten Energienetz (6) durch Abschalten einer der Energiequellen (2) oder einer der Energiesenken (3) minimiert werden.

5. Verfahren nach einem der Ansprüche 1 bis 4, **dadurch gekennzeichnet, dass** dem lokalen Energienetz ein lokaler Energiespeicher (7) hinzugefügt wird und die Steuerung (4) derart ausgestaltet ist, dass die Zugriffe auf den lokalen Energiespeicher (7) hinsichtlich Zugriffshäufigkeit und/oder Energiemenge durch Steuerung von Energiequelle (2) und Energiesenke (3) minimiert werden.

6. Verfahren nach Anspruch 5, **dadurch gekennzeichnet, dass** die Steuerung (4) derart ausgestaltet ist, dass die Zugriffe auf den lokalen Energiespeicher (7) durch Hinzuschalten einer Energiequelle (2) oder einer Energiesenke (3) minimiert werden.

7. Verfahren nach Anspruch 5, **dadurch gekennzeichnet, dass** die Steuerung (4) derart ausgestaltet ist, dass die Zugriffe auf den lokalen Energiespeicher (7) durch Abschalten einer Energiequelle (2) oder einer Energiesenke (3) minimiert werden.

8. Verfahren nach einem der Ansprüche 1 bis 7, **dadurch gekennzeichnet, dass** ein übergeordnetes Energienetz (6) bestehend aus dem lokalen Energienetz und mindestens einem weiteren lokalen Energienetz und einer übergeordneten Steuerung (8) gebildet wird, wobei jedes lokale Energienetz über den jeweiligen Anschluss (5) mit einem übergeordneten Energienetz (6) verbunden ist und wobei die übergeordnete Steuerung (8) derart ausgestaltet ist, dass die Energiebilanz aller im übergeordneten Energienetz (6) stattfindenden Zugriffe über die Anschlüsse (5) zu dem übergeordneten Energienetz (6) minimiert werden.

9. Verfahren nach einem der Ansprüche 1 bis 8, **dadurch gekennzeichnet, dass** die Steuerung der Energiequellen (2) und Energiesenken (3) drahtlos erfolgt.

10. Verfahren nach einem der Ansprüche 1 bis 9, **dadurch gekennzeichnet, dass** Steueralgorithmen für die Steuerung von einem zentralen Server herunterladbar sind.
